Europäisches Patentamt

European Patent Office

Office européen des brevets

(11) Veröffentlichungsnummer: **0 322 944 B1**

# EUROPÄISCHE PATENTSCHRIFT

(45) Veröffentlichungstag der Patentschrift: **30.09.92**

(51) Int. Cl.5: **B01D 53/36**, F23J 15/00

(21) Anmeldenummer: **88202794.9**

(22) Anmeldetag: **07.12.88**

(54) **Verfahren zur Reinigung von Rauchgasen.**

(30) Priorität: **24.12.87 DE 3744031**

(43) Veröffentlichungstag der Anmeldung:
**05.07.89 Patentblatt 89/27**

(45) Bekanntmachung des Hinweises auf die
Patenterteilung:
**30.09.92 Patentblatt 92/40**

(84) Benannte Vertragsstaaten:
**AT BE DE FR GB IT**

(56) Entgegenhaltungen:
DE-A- 3 407 277
DE-A- 3 514 711
DE-A- 3 601 378

**B.W.K. BRENNSTOFF WÄRME KRAFT, Band
37, Nr. 9, September 1985, Seiten 77-84, Düsseldorf, DE; B. SCHÄRER et al.: "Zur Wirtschaftlichkeit der NOx-Abgasreinigung bei
Grossfeuerungsanlagen"**

(73) Patentinhaber: **METALLGESELLSCHAFT AG
Reuterweg 14 Postfach 3724
W-6000 Frankfurt/M.1(DE)**

Patentinhaber: **STADTWERKE MÜNSTER GMBH
Albersloher Weg 27-31
W-4400 Münster(DE)**

(72) Erfinder: **Dörr, Karl-Heinz
Am Gonzenheimer Spiess
W-6500 Mainz(DE)**
Erfinder: **Grimm, Hugo
Sudetenstrasse 37
W-8760 Miltenberg (Main)(DE)**
Erfinder: **Neumann, Heinz
Sandbergstrasse 24
W-6123 Bad König(DE)**
Erfinder: **Ohlms, Norbert, Dr.
Drechslerweg 48
W-4400 Münster (Westf.)(DE)**

(74) Vertreter: **Rieger, Harald, Dr.
Reuterweg 14
W-6000 Frankfurt a.M.(DE)**

EP 0 322 944 B1

## Beschreibung

Die Erfindung betrifft ein verfahren zur Reinigung von Rauchgasen oder anderen feuchten Abgasen, die $SO_2$, $NO_x$ und andere gasförmige Schadstoffe enthalten, wobei durch katalytische Behandlung der $SO_2$-Gehalt zu $SO_3$ oxidiert und der $NO_x$-Gehalt reduziert wird, der $SO_3$-Gehalt durch Kondensation in Form von Schwefelsäure abgeschieden wird und andere gasförmige Schadstoffe mit wäßrigen Flüssigkeiten bei niedrigen Temperaturen ausgewaschen werden.

Rauchgase aus Feuerungsanlagen enthalten an Schadstoffen insbesondere $SO_2$, $NO_x$, HCl und HF. So ergeben sich z.B.bei der Verfeinerung von Ruhr-Steinkohle mit einem Schwefelgehalt von 1 Gew.-% in Großfeuerungsanlagen bei einem Sauerstoffgehalt von 6 Vol.-% im Rauchgas, $SO_2$-Gehalte zwischen 1800 und 2000 mg/Nm$^3$, HCl-Gehalte unterhalb 150 mg/Nm$^3$ und HF-Gehalte unterhalb 50 mg/Nm$^3$. Die $NO_x$-Gehalte liegen - je nach Feuerungsart und verwendeter Kohle - unter 600 mg $NO_2$/Nm3 bis über 2000 mg $NO_2$/Nm$^3$.

Zur Verringerung der Emission dieser Schadstoffe ist es bekannt, das Rauchgas einer katalytischen Nachbehandlung zu unterwerfen. Dabei wird das $SO_2$ zu $SO_3$ oxidiert und das $NO_x$ mit $NH_3$ zu $N_2$ reduziert. Anschließend wird das feuchte Gas unter den Schwefelsäuretaupunkt abgekühlt und das $SO_3$ in Form von Schwefelsäure auskondensiert.

Ein solches Verfahren ist aus der DE-OS 33 31 545 bekannt. Das heiße, $SO_2$-haltige Rauchgas wird auf die für die Katalyse erforderliche Temperatur eingestellt und dann katalytisch umgesetzt. Das feuchte, $SO_3$-haltige Gas wird zunächst in einer ersten Stufe eines Luftvorwärmers bis auf eine Temperatur oberhalb des Schwefelsäuretaupunktes und dann in einer zweiten Stufe unter den Schwefelsäuretaupunkt abgekühlt. Die zweite Stufe des Luftvorwärmers besteht aus säurefestem Werkstoff, beispielsweise aus Glasrohren. Die Abkühlung in der zweiten Stufe kann nur bis zu einer Temperatur erfolgen, die die nach der Großfeuerungsanlagenverordnung vorgeschriebene Mindesttemperatur an der Schornsteinmündung und den erforderlichen Auftrieb des Abgases im Kamin noch gewährleistet. Dadurch ist eine Feinreinigung des Gases bei niedrigen Temperaturen nicht möglich.

Die US-PS 4 164 546 beschreibt ein solches Verfahren, bei dem die heißen Rauchgase unter Zusatz von Ammoniak katalytisch behandelt werden. Die Entfernung des $SO_3$-Gehaltes nach der Katalyse kann mittels einer wäßrigen Absorptionslösung erfolgen. Die Abkühlung bei der Absorption kann nur auf die Mindesttemperatur des Gases an der Schornsteineinmündung erfolgen.

Die DE-OS 36 01 378 beschreibt ein Verfahren, bei dem die heißen Rauchgase unter Ammoniakzusatz katalytisch behandelt werden. Nach Katalyse wird das $SO_3$ nach einer Zwischenkühlung mit Wasser zu Schwefelsäure umgesetzt und das gereinigte Gas in den Kamin geleitet. Auch hier ist die erforderliche Mindesttemperatur für den Eintritt in den Kamin als Austrittstemperatur aus der $SO_3$-Absorption erforderlich.

In der nicht vorveröffentlichten Patentanmeldung P 36 24 462.7 ist ein Verfahren beschrieben, bei dem die heißen Rauchgase ebenfalls vor der Katalyse auf die entsprechende Temperatur eingestellt werden. Nach der Katalyse wird das Rauchgas in einem Wärmeaustauscher durch indirekten Wärmeaustausch auf eine Temperatur unterhalb des Schwefelsäuretaupunktes abgekühlt, das abgekühlte Gas in einem $SO_3$-Kondensator durch Eindüsen von verdünnter Schwefelsäure im Gegenstrom auf eine vorbestimmte Temperatur weiter abgekühlt, und eine verdünnte Schwefelsäure mit vorbestimmter Konzentration auskondensiert, das aus dem $SO_3$-Kondensator austretende Gas in einem Feinwäscher durch Eindüsen einer wäßrigen Flüssigkeit gewaschen und auf 40 bis 55°C abgekühlt, das aus dem Feinwäscher austretende Gas in einem Aufheizer durch Eindüsen von verdünnter Schwefelsäure aus dem $SO_3$-Kondensator auf eine vorbestimmte Temperatur aufgeheizt, das Gas nach der $SO_3$-Kondensation durch ein Filter geleitet, verdünnte Schwefelsäure aus dem Aufheizer in den $SO_3$-Kondensator eingedüst, die Temperatur des Gases im Aufheizer so gewählt, daß das im Wäscher aufgenommene Wasser nicht auskondensiert wird und im austretenden Gas verbleibt, die Austrittstemperatur des Gases aus dem Wärmeaustauscher etwa so eingestellt, daß die Temperatur der im $SO_3$-Kondensator anfallenden verdünnten Schwefelsäure etwa der Temperatur des Gases im Aufheizer entspricht und die Menge der im Aufheizer eingedüsten verdünnten Schwefelsäure so eingestellt, daß die aus dem Aufheizer abgeleitete verdünnte Schwefelsäure eine Temperatur aufweist, die etwa der im $SO_3$-Kondensator erforderlichen Austrittstemperatur des Gases entspricht.

Dieses Verfahren ermöglicht eine Feinreinigung der Gase nach der Katalyse bei niedrigen Temperaturen, da das Gas anschließend wieder auf die für den Eintritt in den Kamin erforderliche Mindesttemperatur aufgeheizt werden kann. Jedoch müssen die Rauchgase vor der Katalyse mit einer für die Katalyse erforderlichen Temperatur vorliegen.

In vielen Fällen, z.B. bei einer vorherigen Staubabscheidung bei niedrigeren Temperaturen, liegen die Rauchgase vor der Katalyse mit einer Temperatur vor, die für die Katalyse zu niedrig ist.

Der Erfindung liegt die Aufgabe zugrunde, eine katalytische Behandlung von relativ kalt vorliegenden, weitgehend staubfreien Rauchgasen mit anschließender Schwefelsäuregewinnung und Feinreinigung in möglichst wirtschaftlicher Weise zu ermöglichen.

Die Lösung dieser Aufgabe erfolgt erfindungsgemäß dadurch, daß das Rauchgas vor der katalytischen Behandlung in einer ersten Aufheizstufe durch indirekten Wärmeaustausch mit dem katalysierten Gas aufgeheizt wird, das aufgeheizte Gas in einer zweiten Aufheizstufe auf die Arbeitstemperatur der katalytischen Behandlung weiter aufgeheizt wird, das in der ersten Aufheizstufe abgekühlte katalysierte Gas in einem indirekten Wärmeaustauscher unter den Schwefelsäuretaupunkt weiter abgekühlt wird, in einen $SO_3$-Kondensator geleitet wird und durch Eindüsen von verdünnter Schwefelsäure der restliche Schwefelsäuredampf absorbiert wird, wobei eine verdünnte Schwefelsäure mit vorbestimmter Konzentration anfällt, das aus dem $SO_3$-Kondensator austretende Gas in einem Wäscher durch Eindüsen einer wäßrigen Flüssigkeit gewaschen und auf 40 bis 60°C abgekühlt wird, und das gereinigte Gas auf die erforderliche Eintrittstemperatur für den Kamin aufgeheizt wird.

Die Aufheizung des Rauchgases in der ersten Aufheizstufe erfolgt so, daß das dabei abgekühlte, katalysierte Gas nicht unter den Schwefelsäuretaupunkt abgekühlt wird und eine Temperatur von 180 bis 250°C aufweist. Die weitere Aufheizung des Rauchgases in der zweiten Aufheizstufe kann durch direkte oder indirekte Wärmezufuhr erfolgen. Es wird jeweils die günstigste Wärmezufuhrquelle ausgewählt, welche die für den Eintritt in die Katalyse erforderliche Temperatur ergibt. Der indirekte Wärmeaustauscher für die weitere Abkühlung des katalysierten Gases unter den Schwefelsäuretaupunkt ist korrosionsfest ausgebildet, z.B. als Röhrenwärmeaustauscher mit Glasrohren, kunststoffbeschichteten oder emaillierten Rohren oder Graphitrohren. Die Austrittstemperatur des Gases wird auf etwa 120 bis 140°C eingestellt. Das im Wärmeaustauscher anfallende Schwefelsäurekondensat kann in den nachfolgenden $SO_3$-Kondensator fließen oder als Produktion abgezogen werden, wobei die Konzentration etwas höher ist als im Kondensator. Der $SO_3$-Kondensator kann als Leerturm, als Turm mit einer Füllkörperschicht oder als Turm mit einem oder mehreren Düsenböden, die mit der verdünnten Schwefelsäure besprüht werden, ausgebildet sein. Die verdünnte Schwefelsäure kann eingedüst oder gesprüht werden. Vor dem Gasaustritt kann ein Tropfenabscheider angeordnet sein. Die verdünnte Schwefelsäure wird in einem Sumpf am Boden abgeschieden. Zwischen dem indirekten Wärmeaustauscher und dem $SO_3$-Kondensator kann ein vertikaler oder horizontaler Venturi geschaltet werden, in dem eine zusätzliche Behandlung des Gases durch Eindüsen von verdünnter Schwefelsäure erfolgt. Die verdünnte Schwefelsäure wird im Kreislauf geführt. Die Konzentration der anfallenden verdünnten Schwefelsäure richtet sich nach der Temperatur, mit der das Gas aus dem $SO_3$-Kondensator austritt. Diese Austrittstemperatur ist abhängig von der Temperatur, mit der die verdünnte Schwefelsäure in den $SO_3$-Kondensator eingeleitet wird. Der nachfolgende Wäscher kann wie der $SO_3$-Kondensator ausgebildet sein, er kann aber auch als Venturi ausgebildet sein, in dem dann die Feinwäsche im Gleichstrom erfolgt. Der Wäscher kann auf den $SO_3$-Kondensator aufgesetzt werden oder separat angeordnet sein. In beiden Fällen besteht keine Verbindung zwischen den Flüssigkeitskreisläufen. Als wäßrige Flüssigkeit kann Wasser oder sehr dünne Schwefelsäure bis zu etwa 20 % verwendet werden oder jede andere Flüssigkeit, die HCl und HF auswäscht. Die wäßrige Flüssigkeit wird zweckmäßigerweise im Kreislauf geführt und durch Wasserverdampfung gekühlt, wobei die vom Gas aufgenommene Wassermenge ersetzt wird. Es ist jedoch auch eine Kühlung durch indirekten Wärmeaustausch möglich. Die im Wäscher aufgenommenen Schadstoffe werden kontinuierlich aus einem abgeleiteten Teilstrom oder diskontinuierlich entfernt, z.B. durch Strippen und nachfolgende Neutralisation. Vor dem Gasaustritt aus dem Wäscher kann ein Filter angeordnet sein, das als Kerzenfilter, Wiremeshfilter, lamellenförmig oder als Filterschüttung ausgebildet sein kann. Die Temperatur, auf die das Gas im $SO_3$-Kondensator abgekühlt wird, ist abhängig vom Partialdruck der Gemischkomponenten $H_2O/H_2SO_4$. Die Konzentration der auskondensierten verdünnten Schwefelsäure wird vorwiegend im Bereich von 60 bis 90 Gew.-% gewählt. Aus dieser Vorgabe ergibt sich die erforderliche Temperatur der in den $SO_3$-Kondensator eingedüsten verdünnten Schwefelsäure.

Eine Ausgestaltung besteht darin, daß das gereinigte Gas in einem Aufheizer durch direkten Wärmeaustausch mit verdünnter Schwefelsäure aus dem $SO_3$-Kondensator auf die Eintrittstemperatur für den Kamin aufgeheizt wird, verdünnte Schwefelsäure aus dem Aufheizer in den $SO_3$-Kondensator eingedüst wird und die Abkühlung des katalysierten Gases in dem indirekten Wärmeaustauscher im Wärmeaustausch mit Luft oder Wasser erfolgt, wobei die Temperatur des gereinigten Gases in dem Aufheizer so gewählt wird, daß das in dem Wäscher aufgenommene Wasser nicht auskondensiert und im austretenden Gas verbleibt, die Austrittstemperatur des Gases aus dem indirekten Wärmeaustauscher etwa so eingestellt wird, daß die Temperatur der in dem $SO_3$-Kondensator anfallenden verdünnten Schwefelsäure etwa der Temperatur des gereinigten Gases in dem Aufheizer entspricht, und die Menge der in den Aufheizer eingedüsten Schwefelsäure so eingestellt wird, daß die aus dem Aufheizer abgeleitete verdünnte Schwefelsäure eine Temperatur aufweist, die etwa der in dem $SO_3$-Kondensator erforderlichen Austrittstemperatur des Gases entspricht. Der Aufheizer kann wie der $SO_3$-Kondensator ausgebildet sein und auf den Wäscher aufgesetzt oder separat angeordnet sein. Vor dem Gasaustritt aus dem Aufheizer oder dem Wäscher kann ein Filter angeordnet werden. Die Sümpfe des Aufheizers und $SO_3$-Kondensators können zum Ausgleich der Säuremengen miteinander verbunden werden. Die Temperatur, auf die das Gas im $SO_3$-Kondensator abgekühlt wird, ist abhängig vom Partialdruck der Gemischkomponenten $H_2O/H_2SO_4$. Die Konzentration der auskondensierten verdünnten Schwefelsäure wird vorwiegend im Bereich von 60 bis 75 Gew.-% gewählt. Aus dieser Vorgabe und der in der Reinigung erforderlichen Temperatur und der dort erfolgenden Wasseraufnahme des Gases ergeben sich alle anderen erforderlichen Temperaturen und Säuremengen. Wenn der indirekte Kühler nicht absolut gasdicht ist, wie z.B. bei der Verwendung von Glasrohren, deren Enden nicht absolut gasdicht eingepackt werden können, wird Luft als Kühlmedium verwendet und dessen Druck im Kühler so eingestellt, daß nur Luft in das Gas eindringen kann und nicht umgekehrt. Bei absolut gasdichten Kühlern kann auch Wasser als Kühlmedium verwendet werden. Die an das Kühlmedium übertragene Wärme kann für andere Zwecke nutzbringend verwendet werden.

Eine Ausgestaltung besteht darin, daß die Temperatur des aus dem Aufheizer austretenden Gases durch Zumischung von heißen Gasen erhöht wird. Durch Zumischung eines kleinen Teilstroms von z.B. Heißluft können Temperaturschwankungen sehr gut aufgefangen werden. Außerdem kann eine solche Zumischung erforderlich werden, wenn aus Werkstoffgründen die Konzentration der Schwefelsäure so niedriggehalten werden muß, daß die erforderliche Abgastemperatur nicht voll erreicht wird.

Eine Ausgestaltung besteht darin, daß die Temperatur der aus dem $SO_3$-Kondensator in den Aufheizer geleiteten verdünnten Schwefelsäure durch indirekten Wärmeaustausch erhöht wird. Mit dieser Maßnahme lassen sich ebenfalls die oben geschilderten Probleme lösen. Die Aufheizung erfolgt durch Fremdwärme, wie z.B. Dampf.

Eine vorzugsweise Ausgestaltung besteht darin, daß die Konzentration der verdünnten Schwefelsäure 60 bis 75 Gew.-% und die Temperatur der aus dem $SO_3$-Kondensator in den Aufheizer geleiteten verdünnten Schwefelsäure 70 bis 110°C beträgt. Bei dieser Konzentration und Temperatur wird die gewünschte Austrittstemperatur des Gases aus dem Aufheizer in besonders günstiger und wirtschaftlicher Weise erzielt.

Eine weitere Ausgestaltung besteht darin, daß das gereinigte Gas in dem indirekten Wärmeaustauscher im Wärmeaustausch mit dem katalysierten Gas auf die Eintrittstemperatur für den Kamin aufgeheizt wird. Bei dieser Ausgestaltung erfolgt die Aufheizung der Gase auf die Eintrittstemperatur für den Kamin also nicht wie in den vorhergehenden Ausgestaltungen durch einen direkten Wärmeaustausch sondern durch einen indirekten Wärmeaustausch. Die Kühlung des Säurekreislaufes des $SO_3$-Kondensators erfolgt durch Wasserzugabe und/oder indirekte Kühlung. Die Temperatur der in den $SO_3$-Kondensator eingeleiteten verdünnten Schwefelsäure kann auch so eingestellt werden, daß sie der Eintrittstemperatur des katalysierten Gases entspricht. In diesem Falle erfolgt keine Abkühlung des Gases im $SO_3$-Kondensator und die Entfernung des Schwefelsäuredampfes erfolgt nur durch Absorption. Dabei fällt eine verdünnte Schwefelsäure mit höherer Konzentration an.

Eine vorzugsweise Ausgestaltung besteht darin, daß die Konzentration der verdünnten Schwefelsäure 60 bis 90 Gew.-% und die Temperatur 100 bis 140°C beträgt. Bei diesen Konzentrationen und Temperaturen werden gute Abscheidungen mit hohen Konzentrationen erzielt.

Eine vorzugsweise Ausgestaltung besteht darin, daß die in den Feinwäscher eingedüste wäßrige Flüssigkeit $H_2O_2$ oder $H_2S_2O_8$ enthält. Dadurch wird auch restliches $SO_2$ zu $SO_3$ oxidiert und absorbiert. Außerdem können Schwankungen bei der katalytischen Umsetzung von $SO_2$ zu $SO_3$ bzw. ein Ausfall des Katalysators aufgefangen werden. Auch der $NO_x$-Gehalt wird gesenkt.

Eine vorzugsweise Ausgestaltung besteht darin, daß das Rauchgas in der ersten Aufheizstufe auf eine Temperatur von 400 bis 430°C aufgeheizt wird. Dabei wird eine gute Ausnutzung der in den katalysierten Gasen enthaltenen Wärmemenge erzielt und gleichzeitig eine Kondensation in diesen Gasen mit Sicherheit vermieden, weil die katalysierten Gase auf eine Temperatur von 180 bis 250°C abgekühlt werden.

Eine vorzugsweise Ausgestaltung besteht darin, daß das katalysierte Gas in dem indirekten Wärmeaustauscher auf eine Temperatur von 120 bis 160°C abgekühlt wird. Diese Temperatur ergibt sehr gute Bedingungen für die nachfolgende Gasbehandlung und gleichzeitig erfolgt eine gute Wärmeausnutzung entweder mittels des Kühlmediums oder durch die Aufheizung der gereinigten Gase.

Eine vorzugsweise Ausgestaltung besteht darin, daß die im Wäscher eingedüste wäßrige Flüssigkeit im Kreislauf geführt ist und durch Wasserverdampfung gekühlt wird. Dadurch wird eine starke Aufkonzentrierung der Schadstoffe in der Waschflüssigkeit erreicht und die Weiterverarbeitung erleichtert. Außerdem wird evtl. zugesetztes

$H_2O_2$ oder $H_2S_2O_8$ besser ausgenutzt.

Eine vorzugsweise Ausgestaltung besteht darin, daß der Unterdruck, der von dem vor dem Kamin angeordneten Gebläse erzeugt wird, so geregelt wird, daß der Null-Punkt mindestens in der Zuleitung für das aufgeheizte katalysierte Gas in den indirekten Wärmeaustauscher liegt. Dadurch wird erreicht, daß jede evtl. Undichtigkeit im indirekten Wärmeaustauscher nur dazu führen kann, daß Falschluft in den Gasstrom eingesaugt wird, jedoch kein Gas in die Atmosphäre austreten kann.

Die Erfindung wird anhand von Figuren und Beispielen näher erläutert.

Fig. 1     zeigt ein Fließschema, bei dem das gereinigte Gas im Wärmeaustausch mit dem katalysierten Gas auf die Eintrittstemperatur für den Kamin aufgeheizt wird.

Fig. 2     zeigt ein Fließschema, bei dem das gereinigte Gas durch direkten Wärmeaustausch mit verdünnter Schwefelsäure aus dem $SO_3$-Kondensator auf die Eintrittstemperatur für den Kamin aufgeheizt wird.

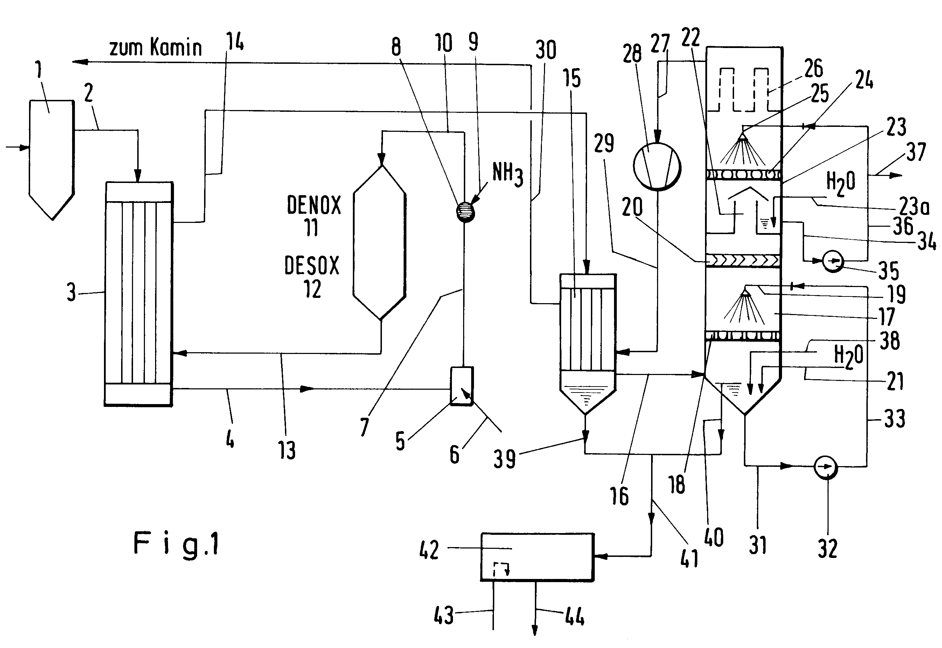

BEISPIEL 1 (Fig. 1):

In das kaltgehende Elektrofilter (1) werden 120 000 $Nm^3$/h Rauchgase aus einer Kohlefeuerungsanlage eingeleitet und dort entstaubt. Die Rauchgase enthalten pro $Nm^3$ 2 000 mg $SO_2$, 800 mg $NO_x$, 50 mg $SO_3$, 150 mg HCl, 30 mg HF, 50 g $H_2O$ und werden mit einer Temperatur von 170°C über Leitung (2) in den Röhrenwärmeaustauscher (3) geleitet, dort auf 420°C vorgewärmt und über Leitung (4) in den Aufheizer (5) geleitet. In dem Aufheizer (5) wird über Brenner (6) Heizöl oder Heizgas zugeheizt und die Gastemperatur auf 450°C erhöht. Das aufgeheizte Rauchgas wird über Leitung (7) in die Mischkammer (8) geleitet, in der über Leitung (9) $NH_3$ dem Rauchgas zugemischt wird. Das Gas wird über Leitung (10) in den DENOX-DESOX-Katalyseturm (11, 12) eingeleitet. Im DENOX-Katalysator (11) wird das $NO_x$ mit $NH_3$ zu $N_2$ reduziert und im DESOX-Katalysator (12) das $SO_2$ zu $SO_3$ oxidiert. Das katalysierte Gas wird mit einer Temperatur von 450°C über Leitung (13) in den Röhrenwärmeaustauscher (3) geleitet und dort im indirekten Wärmeaustausch mit den Rauchgasen auf 200°C abgekühlt, über Leitung (14) in den Röhrenwärmeaustauscher (15) geleitet und dort unter den Schwefelsäuretaupunkt auf eine Temperatur von 120°C abgekühlt. Dabei werden 40 % des im Rauchgas enthaltenen $SO_3$ in Form von Schwefelsäure auskondensiert. Das Gas wird über Leitung (16) in den $SO_3$-Kondensator (17) geleitet, der mit Verteilerboden (18), Bedüsungsvorrichtung (19) und Sprühabscheider (20) ausgerüstet ist. Das Gas wird durch Wasserverdampfung von 120°C auf 100°C abgekühlt. 1,2 $m^3$/h Wasser werden über Leitung (21) in den $SO_3$-Kondensator (17) zugegeben und dort verdampft. In dem $SO_3$-Kondensator (17) werden 60 % des im Gas enthaltenen $SO_3$ in Form von Schwefelsäure kondensiert und absorbiert. Über Leitung (22) gelangt das weitgehend von $SO_3$ befreite Rauchgas mit einer Temperatur von 100°C in den Wäscher (23), der mit Verteilerboden (24) und Bedüsungsvorrichtung (25) ausgerüstet ist. Das Gas wird durch Wasserverdampfung auf 40°C abgekühlt. 3,6 $m^3$/h Wasser werden über Leitung (23a) in den Wäscher (23) zugegeben und dort verdampft. Das im Gas enthaltene HCl, HF und Spuren von $SO_2$ und $SO_3$ werden mittels Sauerwasser oder Schwefelsäure mit einer Konzentration von 5 bis 20 Gew.-% weitgehend ausgewaschen. Im Kerzenfilter (26) werden $H_2SO_4$-Nebel abgeschieden. Das gereinigte Gas wird über Leitung (27), Gebläse (28) und Leitung (29) in den Röhrenwärmeaustauscher (15) geleitet, wo es auf 120°C aufgeheizt wird und dann über Leitung (30) zum Kamin abgeleitet. Das gereinigte Gas enthält pro $Nm^3$ 130 bis 150 mg $SO_2$, 30 bis 40 mg $SO_3$, 50 bis 60 mg HCl, 50 bis 60 mg $NO_x$ (gerechnet als NO), Spuren von HF und 90 g $H_2O$. Aus dem Sumpf des $SO_3$-Kondensators (17) werden 250 $m^3$/h Schwefelsäure mit einer Konzentration von 70 Gew.-% H und einer Temperatur von 100°C über Leitung (31), Pumpe (32), Leitung (33) und Bedüsungsvorrichtung (19) im Kreislauf geführt. Aus dem Sumpf des Wäschers (23) werden 150 $m^3$/h Sauerwasser mit einer Temperatur von 40°C über Leitung (34), Pumpe (35), Leitung (36) und Bedüsungsvorrichtung (25) im Kreislauf geführt. Über Leitung (37) werden 0,5 $m^3$/h mit HCl und HF beladenes Sauerwasser zu einer nicht dargestellten Strippanlage geleitet, dort von HCl und HF befreit und über Leitung (38) in den $SO_3$-Kondensator (17) zurückgeführt. Die im Röhrenwärmeaustauscher (15) und $SO_3$-Kondensator (17) anfallende Schwefelsäure (ca.7,0 $m^3$/Tag mit einer Konzentration von 73,5 Gew.-% $H_2SO_4$ und einer Mischtemperatur von 110°C) wird über die Leitungen (39), (40) und (41) in eine einstufige Aufkonzentrieranlage (42) geleitet und dort auf 92 Gew.-% $H_2SO_4$ aufkonzentriert. Über Leitung (43) wird $H_2O_2$ zugemischt und die Produktionssäure entfärbt. Die Produktion (5,1 $m^3$/Tag mit einer Konzentration von 92 Gew.-% $H_2SO_4$) wird über Leitung (44) abgegeben.

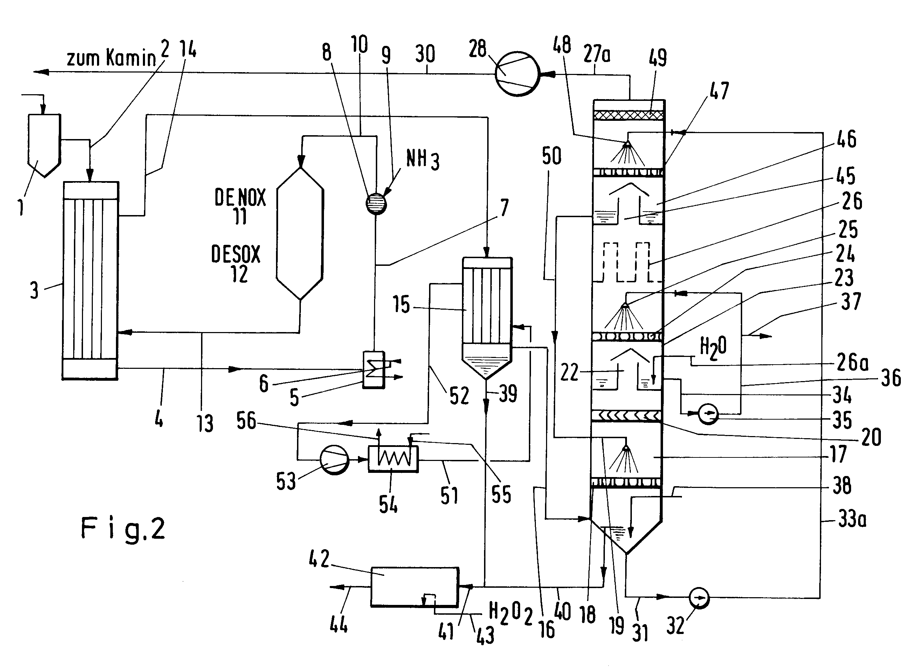

BEISPIEL 2 (Fig. 2):

Das Rauchgas hat die im Beispiel 1 beschriebene Zusammensetzung Menge und Temperatur. Das Rauchgas wird im Röhrenwärmeaustauscher (3) auf 420°C vorgewärmt. Die weitere Aufheizung auf 450°C geschieht in einem indirekten Vorwärmer (5) mittels Heißdampf über Leitung (6). Die katalytische Behandlung des Rauchgases erfolgt wie im Beispiel 1. Über Leitung (13) wird das weitgehend katalysierte Rauchgas mit einer Temperatur von 450°C in den Röhrenwärmeaustauscher (3) geleitet und im indirekten Wärmeaustausch mit dem Rauchgas auf 200°C abgekühlt. Über Leitung (14) wird das Gas mit einer Temperatur von 200°C in den Röhrenwärmeaustauscher (15) geleitet und dort auf 157°C abgekühlt. Dabei werden 30 % des im Rauchgas enthaltenen $SO_3$ kondensiert und in Form von Schwefelsäure abgeschieden. Im $SO_3$-Kondensator (17) wird das Gas auf eine Temperatur von 92°C abgekühlt, wobei 70 % des im Rauchgas enthaltenen $SO_3$ kondensiert und absorbiert und in Form von Schwefelsäure abgeschieden werden. Über Leitung (22) gelangt das Gas mit einer Temperatur von 92°C in den Wäscher (23), wo es auf 40°C abgekühlt wird. Im Kerzenfilter (26) werden Schwefelsäurenebel abgeschieden. Über Leitung (45) gelangt das Gas mit einer Temperatur von 40°C in den direkten Aufheizturm (46), der mit Verteilerboden (47), Bedüsungsvorrichtung (48) und Sprühabscheider (49) ausgestattet ist. In dem Aufheizturm (46) wird das gereinigte Gas auf 105°C aufgeheizt und dann über Leitung (27a), Gebläse (28) und Leitung (30) zum Kamin geleitet. Das gereinigte Gas enthält pro $Nm^3$ 130 bis 150 mg $SO_2$, 30 bis 40 mg $SO_3$, 50 bis 60 mg HCl, 50 bis 60 mg $NO_x$ (gerechnet als NO), Spuren von HF, 78 g $H_2O$. Die Abkühlung des Gases von 92°C auf 40°C im Wäscher (23) erfolgt durch Wasserverdampfung. 2,4 $m^3$/h Wasser werden über Leitung (26a) in den Wäscher (23) zugegeben und verdampft. Aus dem Sumpf des $SO_3$-Kondensators (17) werden 255 $m^3$/h Schwefelsäure mit einer Konzentration von 70 Gew.-% $H_2SO_4$ und einer Temperatur von 105°C über Leitung (31), Pumpe (32), Leitung (33a) in die Bedüsungsvorrichtung (48) in den Aufheizturm (46) gefördert. Die Säure kühlt sich im Aufheizturm (46) auf 92°C ab und wird über Leitung (50), Bedüsungsvorrichtung (19) wieder in den $SO_3$-Kondensator geleitet, wo sich die Säure wieder auf 105°C erwärmt. Aus dem Sumpf des Wäschers (23) werden 150 $m^3$/h Sauerwasser mit einer Temperatur von 40°C über Leitung (34), Pumpe (35), Leitung (36) in die Bedüsungsvorrichtung (25) gefördert. Die im Röhrenwärmeaustauscher (15) und $SO_3$-Kondensator (17) anfallende Schwefelsäure (ca.7,0 $m^3$/Tag mit einer Konzentration von 73 Gew.-% $H_2SO_4$ und einer Mischtemperatur von 110°C) wird über die Leitungen (39), (40) und (41) in eine Aufkonzentrieranlage (42) geleitet und dort auf 92 Gew.-% $H_2SO_4$ aufkonzentriert. Über Leitung (43) wird $H_2O_2$ zugemischt und die Produktionssäure entfärbt. Die Produktion (5,1 $m^3$/Tag mit einer Konzentration von 92 Gew.-% $H_2SO_4$) wird über Leitung (44) abgegeben.

Über Leitung (37) werden 0,5 $m^3$/h mit HCl und HF beladenes Sauerwasser zu einer nicht dargestellten Strippanlage geleitet, dort von HCl und HF befreit und über Leitung (38) in den $SO_3$-Kondensator (17) zurückgeführt. Über Leitung (51) werden 91.000 $Nm^3$/h Luft mit einer Temperatur von 100°C in den Röhrenwärmeaustauscher (15) geleitet und dort auf 160°C aufgeheizt, wobei das $SO_3$-haltige Gas von 200°C auf 157°C abgekühlt wird. Über Leitung (52), Gebläse (53) und Speisewasservorwärmer (54) wird die Luft im Kreislauf geführt. 31 $m^3$/h Speisewasser werden über Leitung (55) in den Speisewasservorwärmer (54) geleitet, dort von 40°C auf 95°C aufgeheizt und über Leitung (56) abgeführt.

Die Vorteile der Erfindung bestehen darin, daß relativ kalt vorliegende Rauchgase auf die für die katalytische Behandlung erforderliche Temperatur in wirtschaftlicher Weise mit sehr wenig Fremdenergie aufgeheizt werden können, aus den katalysierten Gasen Schwefelsäure gewonnen werden kann, eine Feinreinigung der Gase durchgeführt werden kann und trotzdem die für den Eintritt in den Kamin erforderliche Mindesttemperatur wieder ohne Verwendung von Fremdwärme erreicht werden kann.

## Patentansprüche

1. Verfahren zur Reinigung von Rauchgasen oder anderen feuchten Abgasen, die $SO_2$, $NO_x$ und andere gasförmige Schadstoffe enthalten, wobei durch katalytische Behandlung der $SO_2$-Gehalt zu $SO_3$ oxidiert und der $NO_x$-Gehalt reduziert wird, der $SO_3$-Gehalt durch Kondensation in Form von Schwefelsäure abgeschieden wird und andere gasförmige Schadstoffe mit wäßrigen Flüssigkeiten bei niedrigen Temperaturen ausgewaschen werden, dadurch gekennzeichnet, daß das Rauchgas vor der katalytischen Behandlung (11, 12) in einer ersten Aufheizstufe (3) durch indirekten Wärmeaustausch mit dem katalysierten Gas aufgeheizt wird, das aufgeheizte Gas in einer zweiten Aufheizstufe (5) auf die Arbeitstemperatur der katalytischen Behandlung (11, 12) weiter aufgeheizt wird, das in der ersten Aufheizstufe (3) abgekühlte katalysierte Gas in einem indirekten Wärmeaustauscher (15) unter den Schwefelsäuretaupunkt weiter abgekühlt wird, in einen $SO_3$-Kondensator (17) geleitet wird und durch Eindüsen von verdünnter Schwezetsaure der restliche Schwefelsäuredampf absorbiert wird, wobei eine verdünnte Schwefelsäure mit vorbestimmter Konzentration anfällt, das aus dem $SO_3$-Kondensator (17) austretende Gas in einem Wäscher (23) durch Eindüsen einer wäßrigen Flüssigkeit gewaschen und auf 40 bis 60°C abgekühlt wird, und das gereinigte Gas auf die erforderliche Eintrittstemperatur für den Kamin aufgeheizt wird.

2. Verfahren nach Anspruch 1, dadurch gekennzeichnet, daß das gereinigte Gas in einem Aufheizer (46) durch direkten Wärmeaustausch mit verdünnter Schwefelsäure aus dem $SO_3$-Kondensator (17) auf die Eintrittstemperatur für den Kamin aufgeheizt wird, verdünnte Schwefelsäure aus dem Aufheizer (46) in den $SO_3$-Kondensator (17) eingedüst wird und die Abkühlung des katalysierten Gases in dem indirekten Wärmeaustauscher (15) im Wärmetausch mit Luft oder Wasser erfolgt, wobei die Temperatur des gereinigten Gases in dem Aufheizer (46) so gewählt wird, daß das in dem Wäscher (23) aufgenommene Wasser nicht auskondensiert und im austretenden Gas verbleibt, die Austrittstemperatur des Gases aus dem indirekten Wärmeaustauscher (15) etwa so eingestellt wird, daß die Temperatur der in dem $SO_3$-Kondensator (17) anfallenden verdünnten Schwefelsäure etwa der Temperatur des gereinigten Gases in dem Aufheizer (46) entspricht, und die Menge der in den Aufheizer (46) eingedüsten Schwefelsäure so eingestellt wird, daß die aus dem Aufheizer abgeleitete verdünnte Schwefelsäure eine Temperatur aufweist, die etwa der in dem $SO_3$-Kondensator (17) erforderlichen Austrittstemperatur des Gases entspricht.

3. Verfahren nach Anspruch 2, dadurch gekennzeichnet, daß die Temperatur des aus dem Aufheizer (46) austretenden Gases durch Zumischung von heißen Gasen erhöht wird.

4. Verfahren nach Anspruch 1 oder 2, dadurch gekennzeichnet, daß die Temperatur der aus dem $SO_3$-Kondensator (17) in den Aufheizer (46) geleiteten verdünnten Schwefelsaure durch indirekten Wärmeaustausch erhöht wird.

5. Verfahren nach einem der Ansprüche 1 bis 4, dadurch gekennzeichnet, daß die Konzentration der verdünnten Schwefelsäure 60 bis 75 Gew.-% und die Temperatur der aus dem $SO_3$-Kondensator (17) in den Aufheizer (46) geleiteten verdünnten Schwefelsäure 70 bis 110°C beträgt.

6. Verfahren nach Anspruch 1, dadurch gekennzeichnet, daß das gereinigte Gas in dem indirekten Wärmeaustauscher (15) im Wärmeaustausch mit dem katalysierten Gas auf die Eintrittstemperatur für den Kamin aufgeheizt wird.

7. Verfahren nach Anspruch 6, dadurch gekennzeichnet, daß die Konzentration der verdünnten Schwefelsäure 60 bis 90 Gew.-% und die Temperatur 100 bis 140°C beträgt.

8. Verfahren nach einem der Ansprüche 1 bis 7, dadurch gekennzeichnet, daß die in den Feinwäscher (23)eingedüste wäßrige Flüssigkeit $H_2O_2$ oder $H_2S_2O_8$ enthält.

9. Verfahren nach einem der Ansprüche 1 bis 8, dadurch gekennzeichnet, daß das Rauchgas in der ersten Aufheizstufe (3) auf eine Temperatur von 400 bis 430°C aufgeheizt wird.

10. Verfahren nach einem der Ansprüche 1 bis 9, dadurch gekennzeichnet, daß das katalysierte Gas in dem indirekten Wärmeaustauscher (15) auf eine Temperatur von 120 bis 160°C abgekühlt wird.

11. Verfahren nach einem der Ansprüche 1 bis 10, dadurch gekennzeichnet, daß die im Wäscher (23) eingedüste wäßrige Flüssigkeit im Kreislauf geführt und durch Wasserverdampfung gekühlt wird.

12. Verfahren nach einem der Ansprüche 1 bis 11, dadurch gekennzeichnet, daß der Unterdruck, der von dem vor dem Kamin angeordneten Gebläse (28) erzeugt wird, so geregelt wird, daß der Null-Punkt mindestens in der Zuleitung für das aufgeheizte katalysierte Gas in den indirekten Wärmeaustauscher (15) liegt.

**Claims**

1. A method for purifying flue gases or other moist exhaust gases which contain $SO_2$, $NO_x$ and other gaseous pollutants, in which the $SO_2$ content is oxidized to $SO_3$ and the $NO_x$ content is reduced by catalytic treatment, the $SO_3$ content is separated off by condensation in the form of hydrochloric acid and other gaseous pollutants are washed out with aqueous liquids at low temperatures, characterised in that the flue gas is heated up by indirect heat exchange with the catalysed gas in a first heating stage (3) before the catalytic treatment stage (11, 12), the heated gas is heated further to the operating temperature of the catalytic treatment stage (11, 12) in a second heating stage (5), the catalysed gas which is cooled in the first heating stage (3) is cooled further to below the sulphuric acid dew point in an indirect heat exchanger (15), is passed into an $SO_3$ condenser (17) and the remaining sulphuric acid vapour is absorbed by spraying in dilute sulphuric acid, a dilute sulphuric acid having a predetermined concentration being produced, the gas emerging from the $SO_3$ condenser (17) is washed in a scrubber (23) and cooled to 40 to 60°C by spraying in an aqueous liquid, and the purified gas is heated to the required entry temperature for the chimney.

2. A method according to Claim 1, characterised in that the purified gas is heated to the entry temperature for the chimney in a heater (46) by direct heat exchange with dilute sulphuric acid from the $SO_3$ condenser (17), dilute sulphuric acid from the heater (46) is sprayed into the $SO_3$ condenser (17) and the cooling of the catalysed gas takes place in the indirect heat exchanger (15) in a heat exchange with air or water, the temperature of the purified gas in the heater (46) being selected so that the water absorbed in the scrubber (23) does not condense out and remains in the emerging gas, the exit temperature of the gas from the indirect heat exchanger (15) is set approximately so that the temperature of the dilute sulphuric acid produced in the $SO_3$ condenser (17) corresponds approximately to the temperature of the purified gas in the heater (46), and the quantity of sulphuric acid sprayed into the heater (46) is set so that the dilute sulphuric acid branched off from the heater has a temperature which corresponds approximately to the exit temperature of the gas which is required in the $SO_3$ condenser (17).

3. A method according to Claim 2, characterised in that the temperature of the gas emerging from the heater (46) is increased by admixing hot gases.

4. A method according to Claim 1 or 2, characterised in that the temperature of the dilute sulphuric acid passed from the $SO_3$ condenser (17) into the heater (46) is increased by indirect heat exchange.

5. A method according to one of Claims 1 to 4, characterised in that the concentration of the dilute sulphuric acid is 60 to 75% by weight and the temperature of the dilute sulphuric acid passed from the $SO_3$ condenser (17) into the heater (46) is 70 to 110°C.

6. A method according to Claim 1, characterised in that the purified gas in the indirect heat exchanger (15) is heated to the entry temperature for the chimney in a heat exchange with the catalysed gas.

7. A method according to Claim 6, characterised in that the concentration of the dilute sulphuric acid is 60 to 90% by weight and the temperature is 100 to 140°C.

8. A method according to one of Claims 1 to 7, characterised in that the aqueous liquid sprayed into the fine scrubber (23) contains $H_2O_2$ or $H_2S_2O_8$.

9. A method according to one of Claims 1 to 8, characterised in that the flue gas in the first heating stage (3) is heated to a temperature of 400 to 430°C.

10. A method according to one of Claims 1 to 9, characterised in that the catalysed gas is cooled in the indirect heat exchanger (15) to a temperature of 120 to 160°C.

11. A method according to one of Claims 1 to 10, characterised in that the aqueous liquid sprayed in the scrubber (23) is recycled and is cooled by evaporation of water.

12. A method according to one of Claims 1 to 11, characterised in the underpressure which is generated by the blower (28) which is located before the chimney is controlled so that the zero point lies at least in the line for feeding the heated catalysed gas into the indirect heat exchanger (15).

**Revendications**

1. Procédé d'épuration de gaz de fumée ou d'autres gaz brûlés humides, qui contiennent $SO_2$, $NO_x$ et d'autres substances polluantes gazeuses, qui consiste, par traitement catalytique, à oxyder en $SO_3$ la teneur en $SO_2$ et à réduire la teneur en $NO_x$, à séparer la teneur en $SO_3$ par condensation sous forme d'acide sulfurique et à éliminer d'autres substances polluantes gazeuses par lavage par des liquides aqueux à basse température, caractérisé en ce qu'il consiste à chauffer le gaz de fumée avant le traitement catalytique (11,12), dans un premier étage de chauffage (3), par échange de chaleur indirect avec le gaz catalysé, à chauffer davantage le gaz chauffé dans un deuxième étage de chauffage (5) pour le porter à la température du traitement catalytique (11, 12), à refroidir davantage, en-dessous du point de rosée de l'acide sulfurique, dans un échangeur de chaleur (15) indirect, le gaz catalysé refroidi dans le premier étage de chauffage (3), à l'envoyer dans un condenseur (17) de $SO_3$ et à absorber la vapeur d'acide sulfurique restante par projection d'acide sulfurique dilué, avec production d'un acide sulfurique dilué de concentration prescrite, à laver le gaz sortant du condenseur de $SO_3$ (17) dans un laveur (23) par projection d'un liquide aqueux et à le refroidir entre 40 et 60°C et à chauffer le gaz épuré à la température qui est nécessaire pour l'entrée dans la cheminée.

2. Procédé suivant la revendication 1, caractérisé en ce qu'il consiste à porter le gaz épuré à la température d'entrée pour la cheminée dans un dispositif de chauffage (46) par échange de chaleur direct avec de l'acide sulfurique dilué provenant du condenseur de $SO_3$ (17), à projeter de l'acide sulfurique dilué provenant du dispositif de chauffage (46) dans le condenseur de $SO_3$ (17) et à effectuer le refroidissement du gaz catalysé dans l'échangeur de chaleur (15) indirect par échange de chaleur avec de l'air ou avec de l'eau, la température du gaz épuré dans le dispositif de chauffage (46) étant telle que l'eau absorbée dans le laveur (23) ne se sépare pas par condensation et reste dans le gaz sortant, la température à laquelle le gaz sort de l'échangeur de chaleur (15) indirect étant réglée de manière que la température de l'acide sulfurique dilué se formant dans le condensateur de $SO_3$ (17) corresponde à peu près à la température du gaz épuré dans le dispositif de chauffage (46), et la quantité de l'acide sulfurique projeté dans le dispositif de chauffage (46) étant réglée de manière que l'acide sulfurique dilué évacué du dispositif de chauffage ait une température qui corresponde à peu près à la température de sortie du gaz qui est nécessaire dans le condenseur de $SO_3$ (17).

3. Procédé suivant la revendication 2, caractérisé en ce qu'il consiste à élever la température du gaz sortant du dispositif de chauffage (46) par addition de gaz chaud.

4. Procédé suivant la revendication 1 ou 2, caractérisé en ce qu'il consiste à élever la température de l'acide sulfurique dilué envoyé du condenseur de $SO_3$ (17) au dispositif de chauffage (46) par échange de chaleur indirect.

5. Procédé suivant l'une des revendications 1 à 4, caractérisé en ce que la concentration de l'acide sulfurique dilué est comprise entre 60 et 75 % en poids, et la température de l'acide sulfurique dilué passant du condenseur de $SO_3$ (17) au dispositif de chauffage (46) est comprise entre 70 et 110°C.

6. Procédé suivant la revendication 1, caractérisé en ce qu'il consiste à porter le gaz épuré à la température d'entrée dans la cheminée, dans l'échangeur de chaleur (15) indirect en échange de chaleur avec le gaz catalysé.

7. Procédé suivant la revendication 6, caractérisé en ce que la concentration de l'acide sulfurique dilué est comprise entre 60 et 90 % en poids et la température entre 100 et 140°C.

8. Procédé suivant l'une des revendications 1 à 7, caractérisé en ce que le liquide aqueux projeté dans le laveur fin (23) contient $H_2O_2$ ou $H_2S_2O_8$.

9. Procédé suivant l'une des revendications 1 à 8, caractérisé en ce qu'il consiste à porter le gaz de fumée au premier étage de chauffage (3) à une température de 400 à 430°C.

10. Procédé suivant l'une des revendications 1 à 9, caractérisé en ce qu'il consiste à refroidir le gaz catalysé dans l'échangeur de chaleur (15) indirect à une température de 120 à 160°C.

11. Procédé suivant l'une des revendications 1 à 10, caractérisé en ce qu'il consiste à faire circuler en circuit fermé du liquide aqueux projeté dans le laveur (23) et à le refroidir par évaporation d'eau.

12. Procédé suivant l'une des revendications 1 à 11, caractérisé en ce qu'il consiste à régler la dépression produite par le ventilateur (28) disposé en amont de la cheminée, de manière que le point de zéro se trouve au moins dans le conduit d'amenée du gaz catalysé chauffé à l'échangeur de chaleur (15) indirect.

zum Kamin

DENOX 11

DESOX 12

NH3

$H_2O$

$H_2O$

F i g . 1

Fig.2

zum Kamin

DE NOX 11

OESOX 12

NH₃

H₂O

H₂O₂

EP 0 322 944 B1